# EUROPEAN PATENT APPLICATION

(11) **EP 2 884 376 A1**
(43) Date of publication of application: **17.06.2015**
(21) Application number: 12882809.2
(22) Date of filing: 08.08.2012
(51) Int. Cl.: G06F 3/048, G06F 3/041

(54) **PORTABLE ELECTRONIC DEVICE, AND CONTROL METHOD AND PROGRAM THEREFOR**

(71) Applicant: NEC CASIO Mobile Communications, Ltd., Kawasaki-shi, Kanagawa 211-8666 (JP)
(72) Inventor: NAKASHIMA, Keiichi, Kawasaki-Shi Kanagawa 211-8666 (JP)
(74) Representative: Vossius & Partner Patentanwälte Rechtsanwälte mbB
(86) International application number: PCT/JP2012/070228
(87) International publication number: WO 2014/024277

(57) **Abstract**

A portable electronic device is provided with: a display unit that executes a screen display, an operation unit that receives an operation by a user, and a control unit that executes a first function when the operation unit receives a first operation, and displays a virtual operation means for executing a second function on the display unit when the operation unit receives a second operation.

## Description

### [Technical Field]

### (CROSS-REFERENCE TO RELATED APPLICATIONS)

The present application is based on Japanese Patent Application No. 2011-032850 (filed on February 18, 2011), the content of which is hereby incorporated in its entirety by reference into this specification. The present invention relates to a portable electronic device, and a control method and program therefor. In particular, the invention relates to a portable electronic device that is provided with a touch panel.

### [Background]

In recent years, portable electronic devices such as cellphones, smartphones, PDA (Personal Digital Assistants), digital cameras, music players and game consoles are becoming widely used. In particular, with portable electronic devices having higher functionality, portable electronic devices provided with a touch panel are becoming widely used. This is because if a touch panel is used, it becomes possible to directly operate keys or icons displayed on an LCD (Liquid Crystal Display) provided in the portable electronic device, and it is possible to intuitively perform menu setting and application operations. In this way, excellent operability is provided by combining an LCD-based GUI (Graphical User Interface) and a touch panel.

Furthermore, the wider the area displayed by the LCD, the richer the display content and the more intuitive the operability becomes, so that there is a notable tendency for larger LCD screen sizes. Meanwhile, even with the progress of larger LCD screens, portable electronic devices themselves are becoming smaller and more light weight, and there exist many portable electronic devices in which the device is held in one hand and one-handed operation is possible. In this way, with progress in the miniaturization of portable electronic devices at the same time as the enlarging of LCD screens, much of the area of the operation-side face of the portable electronic devices is occupied by an LCD and touch panel. As a result, hard keys that recognize user operations by a switch or the like are often arranged on a side face or a part of a lower portion of the face (display surface) on which a touch panel is mounted. Thus, due to the portable electronic devices becoming smaller and lighter in weight, even if it is possible to operate a portable electronic device with one hand, actions are necessary such as changing the way of holding the portable electronic device when it is not possible touch a hard key.

Even with a soft key operated using a touch panel, actions are necessary such as changing the way of holding the portable electronic device in a case of performing an operation on a soft key arranged in an area on the reverse side with regard to the hand holding the portable electronic device. Since the operation is done while holding the portable electronic device, the finger used when performing the operation is often the thumb. However, the operation range of the thumb is limited, and there may be cases where a smooth operation on the portable electronic device cannot be realized with one hand.

In addition, for a thin portable electronic device, there may be a risk of dropping the device by mistake when changing the way it is held. Furthermore, when it is desired to operate on the portable electronic device inside a crowded train or the like, operations by one hand may often be restricted.

In this regard, Patent Literature 1 discloses a digital camera provided with a touch panel, where in a case of a user touching a screen display part, various types of operation button are displayed in the vicinity of the position touched, and it is possible to perform a prescribed operation without changing the way of holding the camera in one hand.

### [CITATION LIST]

### [PATENT LITERATURE]

### [Patent Literature 1]

Japanese Patent Kokai Publication No. JP2007-052795A

### [Summary]

### [Technical Problem]

It is to be noted that the disclosure of the abovementioned cited literature is incorporated herein by reference thereto. The following analysis is given from a viewpoint of the present invention.

As described above, Patent Literature 1 discloses an operation method of displaying various types of operation key in the vicinity of a position touched on a screen. However, this type of operation method is a method that can be realized because what is used is a digital camera specialized for the function of taking photographs. Therefore, the operation method disclosed in Patent Literature 1 cannot be applied to portable electronic devices having various functions such as email and web browsing.

Applications such as web browsing and the like are run by a touch panel operation, and when a position on a display device is touched it is necessary to clearly distinguish whether the operation relates to an instruction for an application such as web browsing, or an instruction for displaying various types of operation button. For example, when a user touches a touch panel anticipating an action of returning to a page before the presently displayed page, an action contrary to the user's intention occurs due to various types of operation button being displayed, and a portable electronic device with inferior convenience and ease of use is perceived. In this way, there is a problem to be solved in operating a portable electronic device with one hand.

In an aspect of the present invention, it is desired to have a portable electronic device and a control method and program therefor, which facilitate operation by a user, without changing the hand that holds the portable electronic device.

### [Solution to Problem]

According to a first aspect of the present invention there is provided a portable electronic device having a display unit that executes a screen display; an operation unit that receives an operation by a user; and a control unit that executes a first function when the operation unit receives a first operation and displays a virtual operation means for executing a second function, on the display unit, when the operation unit receives a second operation.

According to a second aspect of the present invention there is provided a control method for a portable electronic device provided with a display unit that executes a screen display and an operation unit that receives an operation by a user, wherein the method includes a step of executing a first function when the operation unit receives a first operation, and a step of displaying a virtual operation means for executing a second function, on the display unit, when the operation unit receives a second operation. It is to be noted that the method is associated with a particular machine called a portable electronic device which is provided with a display unit and an operation unit.

According to a third aspect of the present invention, there is provided a program that executes on a computer controlling a portable electronic device provided with a display unit that executes a screen display and an operation unit that receives an operation by a user, wherein the program executes a process of executing a first function when the operation unit receives a first operation, and a process of displaying a virtual operation means for executing a second function, on the display unit, when the operation unit receives a second operation. It is to be noted that this program may be recorded on a computer-readable storage medium. The storage medium may be a non-transient storage medium such as a semiconductor memory, a hard disk, a magnetic recording medium, an optical recording medium or the like. The present invention may be embodied as a computer program product.

### [Advantageous Effects of Invention]

According to the various aspects of the present invention, it is desired to have a portable electronic device and a control method and program therefor, which facilitate operation by a user, without changing the hand that holds the portable electronic device.

### [Brief Description of Drawings]

[Fig. 1]

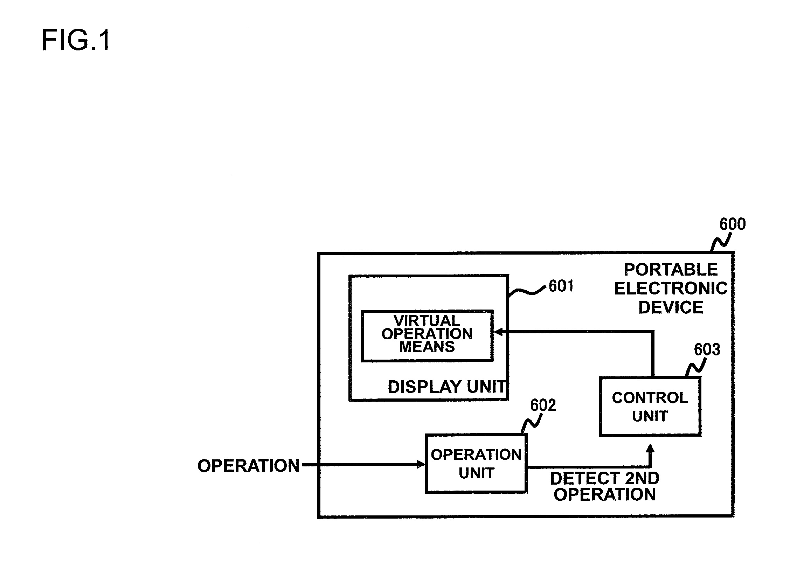

   FIG. 1 is a diagram for describing an outline of an exemplary embodiment.
[Fig. 2]

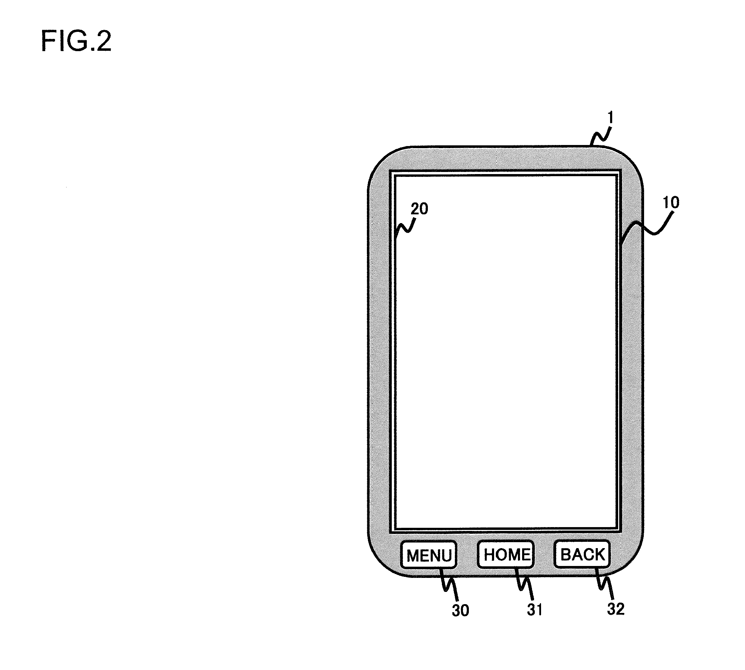

   FIG. 2 is a plan view showing an example of an overall configuration of a portable electronic device according to a first exemplary embodiment.
[Fig. 3]

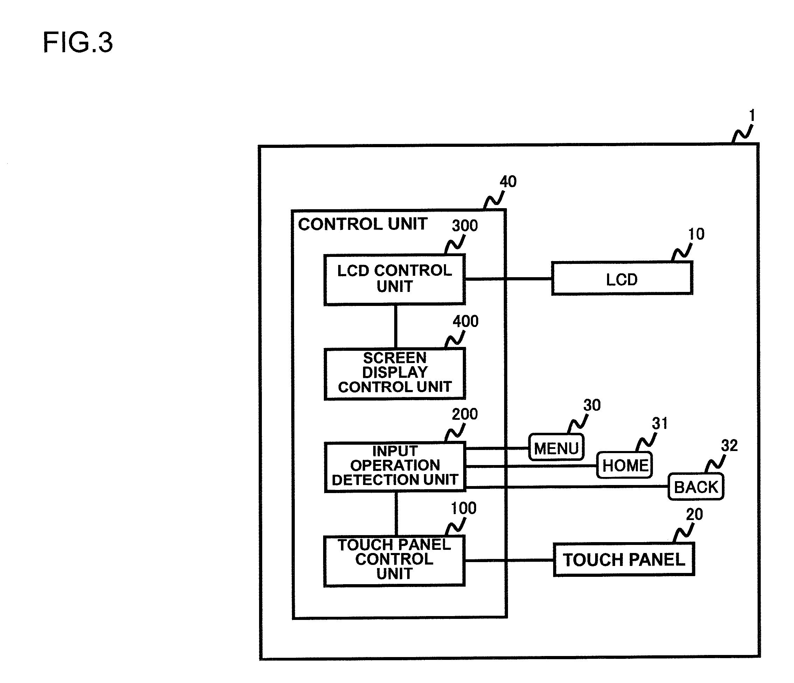

   FIG. 3 is a diagram showing an example of a configuration of a portable electronic device according to the first exemplary embodiment.
[Fig. 4]

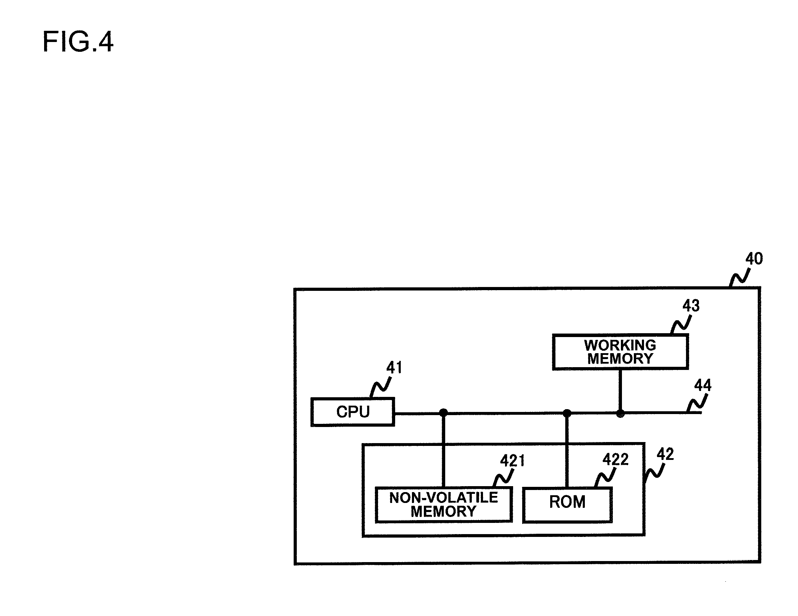

   FIG. 4 is a diagram showing an example of a hardware configuration of a control unit shown in FIG. 3.
[Fig. 5]

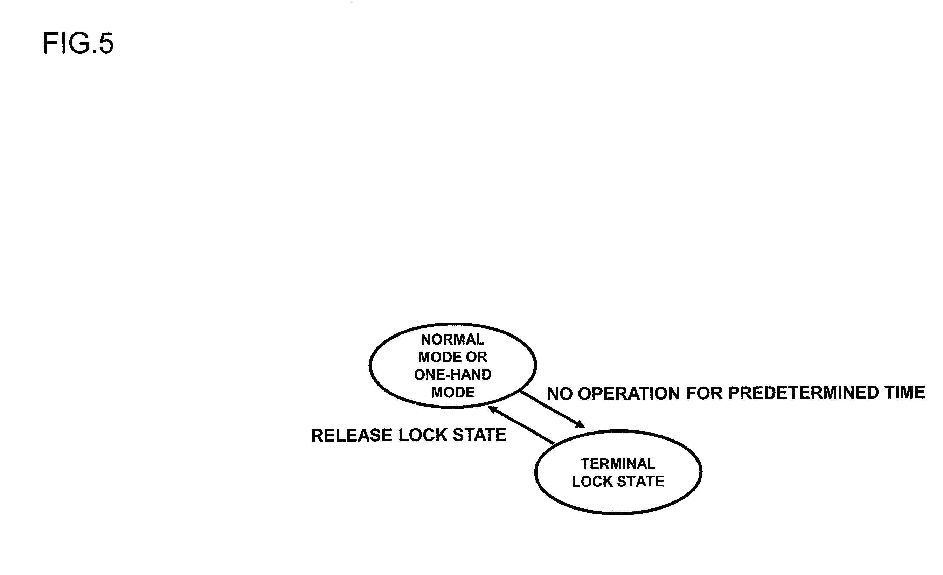

   FIG. 5 is a diagram showing a state transition of the portable electronic device according to the first exemplary embodiment.
[Fig. 6]

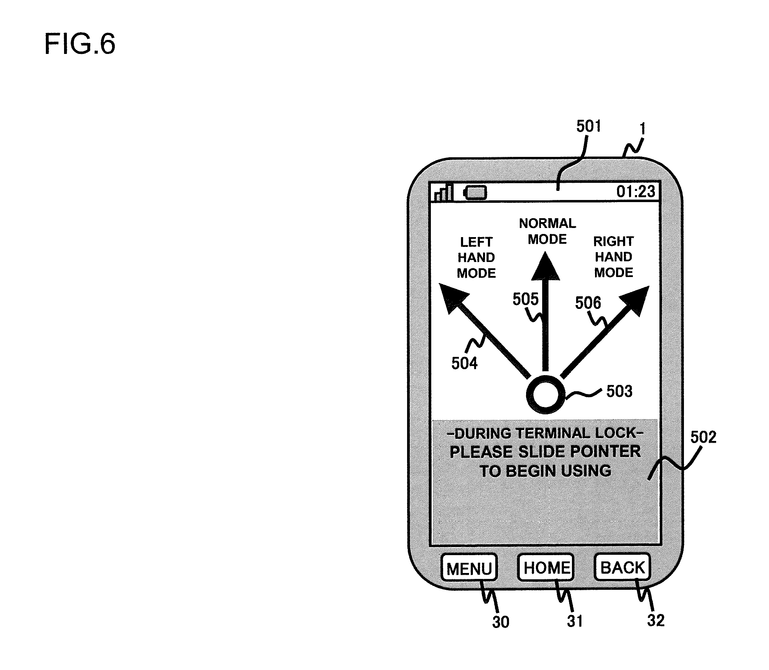

   FIG. 6 is a diagram showing an example of a screen display when the portable electronic device is in a terminal lock state.
[Fig. 7]

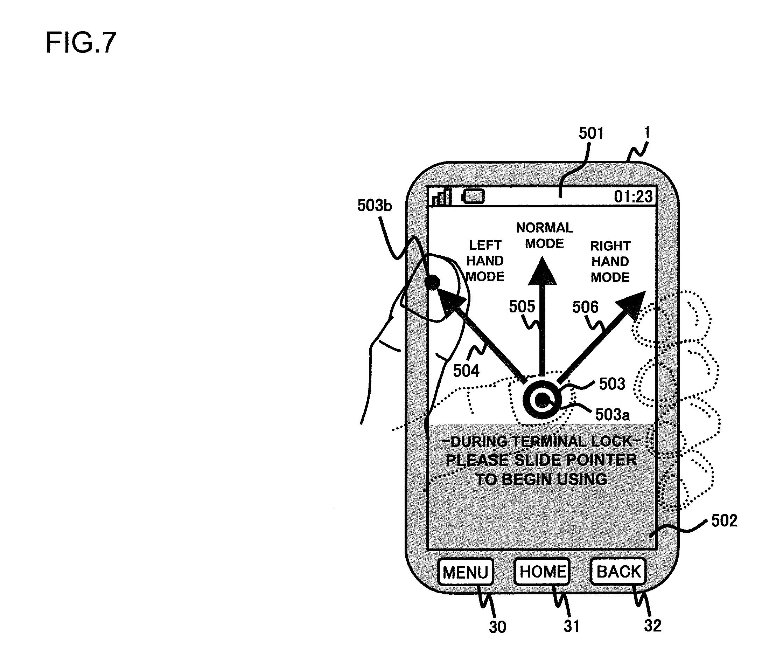

   FIG. 7 is a diagram showing an example of a user operation when the terminal lock state of the portable electronic device is released, and there is a transition to a left hand mode.
[Fig. 8]

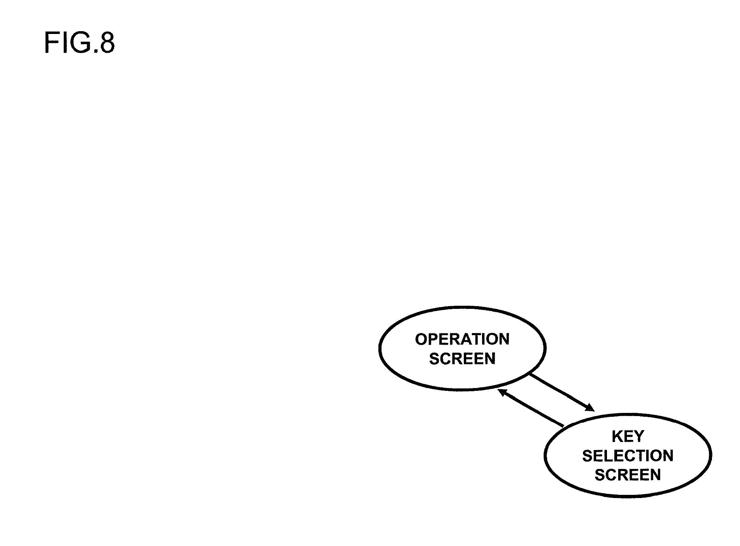

   FIG. 8 is a diagram showing relationships between a normal operation screen and a key selection screen of the portable electronic device.
[Fig. 9]

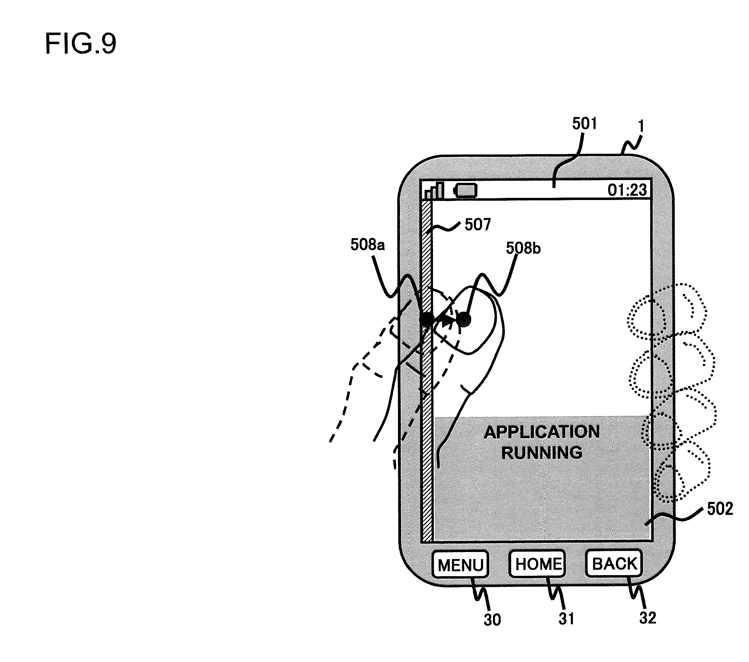

   FIG. 9 is a diagram showing an example of an operation method when a key selection screen is called up from an operation screen when in left hand mode.
[Fig. 10]

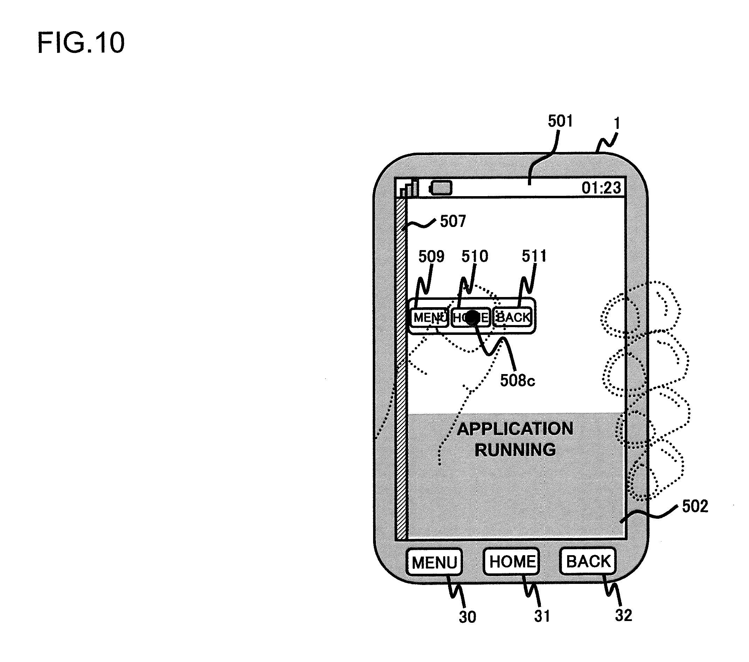

   FIG. 10 is a diagram for describing an operation method for a key selection screen when in left hand mode.
[Fig. 11]

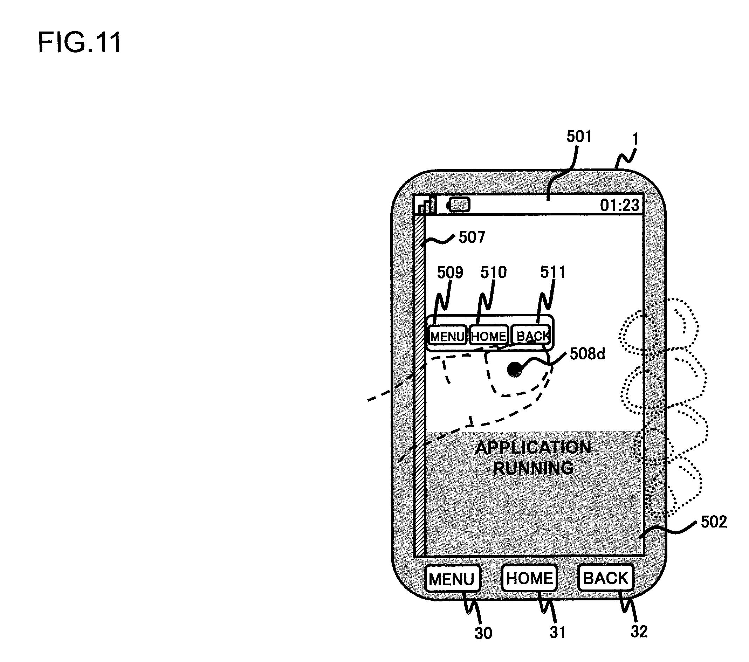

   FIG. 11 is a diagram for describing an operation method for a key selection screen when in left hand mode.
[Fig. 12]

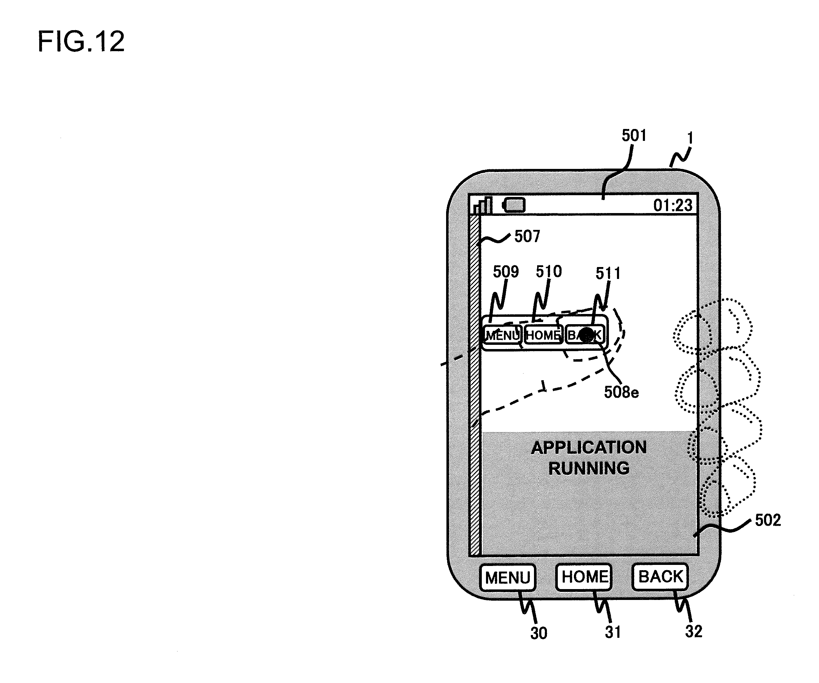

   FIG. 12 is a diagram for describing an operation method for a key selection screen when in left hand mode.
[Fig. 13]

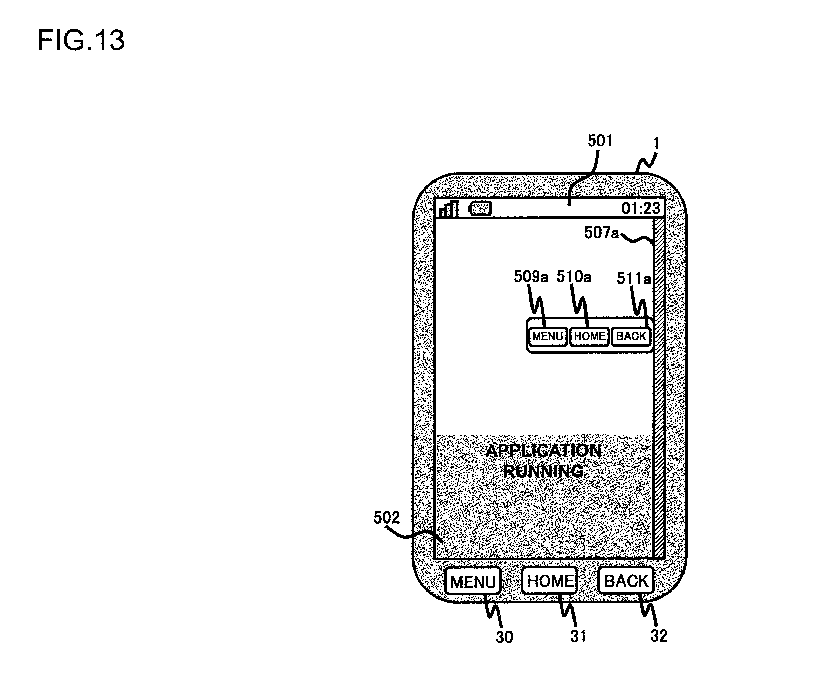

   FIG. 13 is a diagram for describing a key selection screen when in right hand mode.
[Fig. 14]

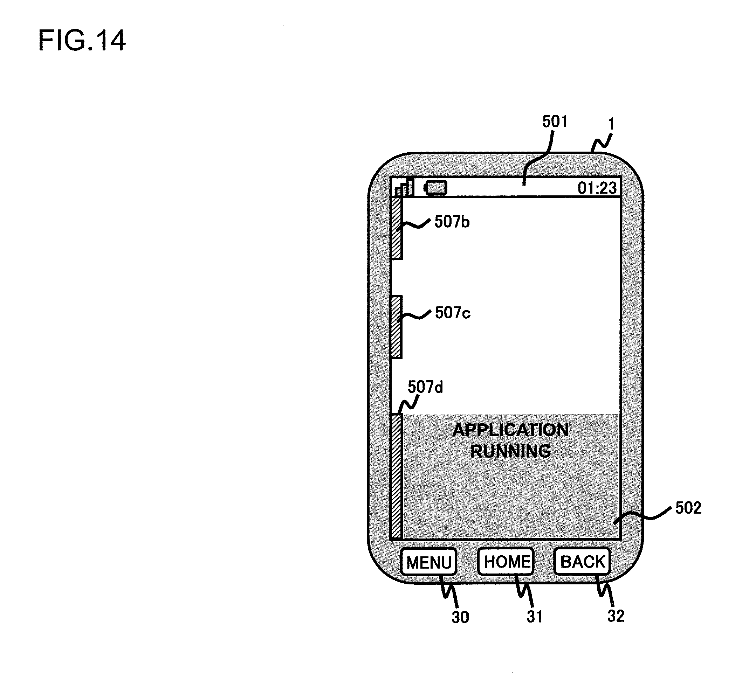

   FIG. 14 is a diagram showing an example when a plurality of touch operation detection areas are arranged.

### [Description of Embodiments]

First, a description is given concerning an outline of an exemplary embodiment using FIG. 1. It is to be noted that reference symbols in the drawings attached to this outline are added to respective elements for convenience as examples in order to aid understanding, and are not intended to limit the present invention to modes illustrated in the drawings.

As described above, there exists a desire to perform operations with one hand in portable electronic devices that have become smaller and lighter in weight. However, since operations are performed while holding a portable electronic device, the finger doing the operation is often the thumb and the range of possible movement is restricted. As a result, in order to press a hard key such as a MENU key or the like, it may be necessary to perform an action such as adjusting the way the portable electronic device is held. Therefore, it is desired to have a portable electronic device that facilitates operation by a user, without changing the hand that holds the portable electronic device.

Accordingly, the portable electronic device 600 shown in FIG. 1 is provided. The portable electronic device 600 shown in FIG. 1 includes a display unit 601 that executes a screen display; an operation unit 602 that receives an operation by a user; and a control unit 603 that executes a first function when the operation unit 602 receives a first operation, and displays a virtual operation means for executing a second function on the display unit 601 when the operation unit 602 receives a second operation. When the user uses the portable electronic device 600, and an operation such as giving an instruction to a running application is the first operation, a function corresponding to the first operation is executed.

On the other hand, in a case of trying to execute a function that is not necessarily coupled with a running application, an opportunity (choice) is provided to detect a second operation to be performed by the user, and in a case where the second operation is detected, to execute a second function by displaying a virtual operation means. For example, by a setting enabling the second operation to be easily performed with one hand, and performing the second operation, the choice shown in the virtual operation means is selected and the second function is executed. As a result, in a case of operating the portable electronic device with one hand, it is possible to perform a prescribed operation without the need to change how the portable electronic device 600 is held.

### [First Exemplary Embodiment]

Next, a detailed description is given concerning a first exemplary embodiment, making use of the drawings. FIG. 2 is a plan view showing an example of an overall configuration of a portable electronic device 1 according to the present exemplary embodiment. The portable electronic device 1 shown in FIG. 2 is configured from an LCD 10, a touch panel 20 and hard keys 30 to 32.

The LCD 10 displays information that is necessary when a user operates the portable electronic device 1. The LCD 10 is a black and white or a color liquid crystal panel. In the present exemplary embodiment a description is given using the liquid crystal panel as a display device of the portable electronic device 1, but there is no limitation to this, and display devices such as organic EL (electro-luminescence) or the like are also possible.

The touch panel 20 is a device that detects a user operation by a plate sensor. There are various types of touch panel method, including the electrostatic capacitance method, but any type is possible. The touch panel 20 is arranged to approximately overlap the LCD 10. Therefore, the LCD 10 display area corresponds, as it is, to an area of operation by the touch panel 20. It is to be noted that since the display area of the LCD 10 and an operation detection area of the touch panel 20 approximately overlap, the drawings below have illustrations restricted to the LCD 10.

The hard key 30 functions as a MENU key, the hard key 31 functions as a HOME key, and the hard key 32 functions as a BACK key. By pressing the MENU key, various types of menus are displayed; by pressing the HOME key, the screen transitions to a standby screen; and by pressing the BACK key, the screen transitions to a previous screen.

Next, a description is given concerning an internal configuration of the portable electronic device 1. FIG. 3 is a diagram showing an example of a configuration of the portable electronic device 1 according to the present exemplary embodiment. The portable electronic device 1 shown in FIG. 3 is configured from the LCD 10, the touch panel 20, the hard keys 30 to 32, and a control unit 40. Since the LCD 10, the touch panel 20 and the hard keys 30 to 32 are as described above, descriptions thereof are omitted.

The control unit 40 is configured from a touch panel control unit 100, an input operation detection unit 200, an LCD control unit 300, and a screen display control unit 400. The control unit 40 implements switching of operation mode based on user operations detected by the input operation detection unit 200, giving operation instructions to respective applications, and generation and display of information necessary when the user operates the portable electronic device 1.

The touch panel control unit 100 is connected to the touch panel 20, and has the role of a driver to perform setting and driving of the touch panel 20 as hardware. The touch panel control unit 100 detects a position (physical coordinates) at which the user touches the touch panel 20, and transmits the coordinate information to the input operation detection unit 200.

The input operation detection unit 200 calculates the position at which the user touches the touch panel as coordinates (logical coordinates) with respect to the LCD 10, from the coordinate information received from the touch panel control unit 100. It is to be noted that the input operation detection unit 200 can also detect operations by the hard keys 30 to 32.

The LCD control unit 300 is connected to the LCD 10, and has the role of a driver to perform setting and driving of the LCD 10 as hardware. The LCD control unit 300 generates a signal for driving the LCD 10 from screen display information transmitted from the screen display control unit 400, and transmits the signal to the LCD 10.

The screen display control unit 400 generates a display image such as a key selection screen or the like that is seen directly when the user performs an operation. Information required by the screen display control unit 400 includes content such as which key(s) is/are displayed, and which position(s) the key(s) is/are displayed at.

Next, a description is given concerning a hardware configuration of the control unit 40. FIG. 4 is a diagram showing an example of a hardware configuration of the control unit 40. The control unit 40 is configured from a CPU (Central Processing Unit) 41, a storage unit 42, and working memory 43, and is connected via a bus 44.

The CPU 41 is a central processing unit that operates in accordance with a program. By the CPU 41 executing a program, various types of function and application of the portable electronic device 1 are implemented.

The storage unit 42 stores various types of setting information necessary when the CPU 41 implements various functions of the portable electronic device 1. The information stored in the storage unit 42 may be the current operation mode of the portable electronic device 1, key information displayed on a screen, display direction of the key selection screen, and the like. Furthermore, the storage unit 42 is provided with non-volatile memory 421 and ROM (Read Only Memory) 422. The non-volatile memory 421 holds information that must be stored even after turning OFF a power supply provided to the portable electronic device 1. The ROM 422 is a storage device that stores fixed data such as internal content and various types of control program executed by the CPU 41.

The working memory 43 is configured by RAM (Random Access Memory), and stores data temporarily required when the CPU 41 executes a program.

Next, a description is given concerning operation of the portable electronic device 1. The portable electronic device 1 has a plurality of operation modes. A first operation mode is normal mode. The normal mode is a mode in which screen display and screen transition are not performed giving consideration to the mode (both hands, right hand, left hand) when the user is performing an operation. A second operation mode is a one-hand operation mode. The one-hand operation mode is a mode in which the screen display and screen transition are performed giving consideration to whether the user is performing operations mainly with the right hand or is performing operations mainly with the left hand. It is to be noted that operating with the right hand is called a right hand mode, and operating with the left hand is called a left hand mode; a description is given below.

In the portable electronic device 1, there is a terminal lock state to which the device transitions when an operation is not performed for a predetermined period of time. When the portable electronic device 1 is not operated for a fixed period of time, the device transitions to a terminal lock state, to provide a function of preventing a mistaken operation of the portable electronic device 1 by restricting operation by the touch panel. FIG. 5 is a diagram representing state transitions with regard to the respective modes described above and the terminal lock state.

Next, a description is given concerning operation when transitioning from the terminal lock state to the normal mode or the one-hand mode. FIG. 6 is a diagram showing an example of a screen display when the portable electronic device 1 is in the terminal lock state. Display areas of the LCD 10 include respective display areas of: an upper pict-area 501 that displays icons showing incoming signal strength, remaining battery level or time and the like; a lock state display area 502 indicating the terminal lock state; and a pointer area 503 in which touch panel operations are possible when in a terminal lock state. Furthermore, an arrow 504 that guides a slide operation in an upper left direction, an arrow 505 that guides a slide operation in an upward direction, and an arrow 506 that guides a slide operation in an upper right direction are displayed on the LCD10. At the same time, as a result of a slide operation in a direction of the respective arrows, a message is displayed (left hand mode, normal mode, right hand mode) that clearly shows the mode to which the portable electronic device 1 transitions. It is to be noted that, as described above, since the terminal lock state exists in order to prevent a mistaken operation of the portable electronic device 1, if the user touches an area outside of the circular pointer 503, the operation types in question are invalid.

When the user makes the device recover from a terminal lock state and uses the portable electronic device 1, the user releases the terminal lock state by sliding the circular pointer area 503 along a prescribed path. In the portable electronic device 1 according to the present exemplary embodiment, a judgment is made as to whether the user has made a slide operation along a path of any of the arrows 504 to 506, and the operation mode is determined.

FIG. 7 is a diagram showing an example of a user operation when the terminal lock state of the portable electronic device 1 is released, and a transition made to a left hand mode. When the user wishes to transition to the left hand mode, the user touches the point 503a displayed in the center of the pointer area 503. Thereafter, the user slides the point 503a to the point 503b along the path shown by the arrow 504, while touching the point 503a. When this type of slide operation is recognized by the control unit 40 via the touch panel control unit 100 and the input operation detection 200, the terminal lock state of the portable electronic device 1 is released and a transition is made to the left hand mode.

Similarly, by sliding the point 503a along a path shown by the arrow 506 in an upper right direction, it is possible to transition to a right hand mode, and by sliding the point 503a along a path shown by the arrow 505 in an upward direction, it is possible to transition to a normal mode.

In this way, by displaying paths in advance for transitioning to the respective modes by arrows, transition operations to one-hand modes are intuitively possible; by assigning the left hand mode to a slide operation to the upper left direction that is easy to operate by the left hand, and by assigning the right hand mode to a slide operation to the upper right direction that is easy to operate by the right hand, it is possible to determine an operation mode without changing the way of holding the portable electronic device 1. It is to be noted that the arrows displayed when an operation mode is determined are not limited to the directions shown in FIG. 6 and FIG. 7, and a sideways direction is also possible.

A description has been given in which recovery from a terminal lock state is performed when an operation mode is determined, but contexts in which the operation mode can be determined are not limited to recovery from the terminal lock state. For example, determination of operation mode may be considered in contexts such as when a security mode is released, when recovery is performed from a standby mode or hibernation mode, or the like.

Next, a description is given concerning touch panel operations in the left hand mode and the right hand mode. In the left hand mode and the right hand mode, there are key operation screens showing keys that perform operations different from soft keys or icons displayed on the LCD 10 of the portable electronic device 1. This is exemplified by a screen in which keys implementing functions equivalent to functions assigned to the hard keys 30 to 32 in the key operation screen, are displayed on the LCD 10.

An operation method of the key operation screen is described later, but the key operation screen is easily called up by the left hand in the case of the left hand mode, and by the right hand in the case of the right hand mode, and key selection is realized. In this way, with a screen on which the key selection screen is virtually arranged on a normal operation screen, the normal operation screen and the key selection screen can be reciprocally switched (refer to FIG. 8). It is to be noted that the key selection screen is equivalent to a virtual operation means described above.

Next, a description is given concerning an operation method of a key selection screen. FIG. 9 is a diagram showing an example of an operation method when the key selection screen is called from an operation screen when in the left hand mode. It is to be noted that in FIG. 9, a thumb slides from point 508a to 508b. When in the left hand mode, the portable electronic device 1 always displays a touch operation detection area 507 in order to transition to the key selection screen at the left edge of the LCD 10. Since running applications are displayed in an area outside of the touch operation detection area 507, the key selection screen is displayed in a range that does not affect the display of these applications.

When the control unit 40 detects an operation on the touch panel 20 by the user at any position in the touch operation detection area 507, and thereafter detects that a slide operation has been performed, a display image is generated in the screen display control unit 400, and the key selection screen is displayed in the LCD 10 through the LCD control unit 300.

FIG. 10 is an example of a display including a key selection screen after the user makes a slide operation from point 508a to point 508b. Virtual keys 509 to 511 in FIG. 10 form a key selection screen. On detecting that there has been a slide operation to the position of point 508b, the control unit 40 displays the key selection screen at a position centered on point 508a. It is to be noted that virtual key 509 corresponds to the MENU key, virtual key 510 corresponds to the HOME key, and virtual key 511 corresponds to the BACK key.

In this way, when the user touches an arbitrary position in the touch operation detection area 507 and makes a slide operation of a predetermined amount in a right-side direction while touching the screen, the key selection screen is displayed centered on this position. At this time, with regard to the slide amount in the right-side direction (coordinate movement amount from point 508a to 508b) an optimal value according to the shape of the portable electronic device 1 is obtained, and about half a thumb width is preferable, which is an extent at which the user does not feel stress when performing a slide operation.

Next, a description is given concerning an operation when the user selects a virtual key to be executed, after the key selection screen is displayed. When the user presses a virtual key displayed on the key selection screen, an operation corresponding to the virtual key that has been pressed is performed. For example, when the virtual key 509 is pressed, an operation equivalent to the MENU key can be performed. In a case where the user further slides his or her thumb from a state shown in FIG. 10 and it is detected that the thumb has separated from the touch panel 20 in an area corresponding to the virtual key 511, a function equivalent to the BACK key is executed, with the virtual key 511 selected.

On the other hand, as shown in FIG. 11, in a case where it is detected that the thumb has separated at point 508d, which is a position outside of the key selection screen formed by the virtual keys 509 to 511, the key selection screen is erased, cancelling a user operation on the key selection screen. It is to be noted that even if the user's thumb moves to point 508d shown in FIG. 11, if the thumb does not separate from the touch panel 20, with the user operation continuing, the display of the key selection screen is maintained. That is, in a case where the thumb separates from the screen after sliding to the position (point 508e) of the virtual key 511 as shown in FIG. 12 from a state of having moved to the position of point 508d in FIG. 11, the case is treated as with the virtual key 511 being selected. The above is an operation method of a key selection screen in the left hand mode.

As shown in FIG. 13, the same is performed for the right hand mode, by applying operations of the left hand mode symmetrically. In the normal mode, the touch operation detection area is not displayed in the left hand mode or the right hand mode, and the respective functions assigned to the hard keys can be executed by pressing the hard keys 30 to 32. It is to be noted that transitioning to the left hand mode or the right hand mode is possible not only in a case of recovery from the terminal lock state or the like, but also by providing keys having the role of changing the hand used for holding. For example, it is possible to provide a key enabling changing the holding hand in some key(s) displayed in the key selection screen.

As described above, when the portable electronic device 1 is in a terminal lock state, it is possible to simultaneously implement an operation of releasing the lock state and an operation of selecting an operation mode. As a result, release of the terminal lock state and selection of the operation mode by the minimum necessary operation is enabled, and it is possible to provide a portable electronic device with high operability.

By providing the touch operation detection area at the left edge of the LCD 10 when in the left hand mode and at the right edge when in the right hand mode, it is possible to easily transition to the key selection screen by the operating-side hand, without impeding the display of running applications. In addition, by performing a display of the key selection screen centered on a position detected by the touch operation detection area when transitioning to the key selection screen, it is possible to call the key selection screen by a simple operation regardless of different hand sizes of different users or the position at which the portable electronic device 1 is held.

By fixing a selection operation with separation of a finger from the touch panel 20 as a trigger, it is possible to select a key with one slide operation, without the user's finger separating from the screen after sliding the touch operation detection area. Similarly, by continuing a display of the key selection screen until the finger separates from the touch panel 20, after sliding to a place where the thumb is once separated from the key selection screen and confirming content displayed in the key selection screen, an operation of selecting a desired key is possible.

In this way, when functions assigned to the hard keys are implemented, the portable electronic device 1 according to the present exemplary embodiment intuitively implements simple operations by using the touch panel, without requiring any prior action. Furthermore, it will be understood that in the left hand mode or right hand mode, it is not necessary that single-hand operations be performed, and if operations are performed with both hands when in single-hand mode, it is possible to perform operations on the portable electronic device 1 more speedily and efficiently than when in normal mode. As described later, keys displayed in the key selection screen are not limited to hard keys, and a soft key arrangement is also possible; this is because it is possible to operate quickly with one hand by assigning keys used with high frequency to keys displayed in the key selection screen, and to operate, with the other hand, keys in areas not reachable by the hand holding the portable electronic device 1.

### [Second Exemplary Embodiment]

Next, a detailed description is given concerning a second exemplary embodiment, making reference to the drawings. Since a portable electronic device 2 according to the present exemplary embodiment has a hardware configuration that does not differ from the hardware configuration of the portable electronic device 1 according to the first exemplary embodiment, descriptions corresponding to FIG. 2 to FIG. 4 are omitted. In the present exemplary embodiment, a more detailed description is given concerning a touch operation detection area described above.

The description is given with the touch operation detection area according to the first exemplary embodiment being set at the left edge if in left hand mode, and being arranged at the right edge if in right hand mode. In the present exemplary embodiment, the description is such that there is no limitation to these arrangements.

In the first exemplary embodiment a description was given in which an area at the left edge among possible display areas of the LCD 10, from the top edge to the bottom edge, is the touch operation detection area 507. However, as shown in FIG. 14, there may also be a plurality of touch operation detection areas (507b to 507d).

In addition, the touch operation detection areas need not necessarily be arranged at the left edge for a left hand mode and at the right edge for a right hand mode, and it is also possible to have a touch operation detection area that is common to the left hand mode and the right hand mode. Specifically, an arrangement may be considered where the touch operation detection areas are at left and right edges for both the left hand mode and right hand mode.

Or, the arrangement of the touch operation detection areas may be changed according to the posture of the portable electronic device 2. The portable electronic device 2 is provided with an acceleration sensor or a gyro-sensor, and if it is possible to detect that the posture of the portable electronic device 2 has changed, it is possible to arrange the touch operation detection areas in correspondence with the posture after the change. For example, in a case where the user uses the device in a vertical orientation, the touch operation detection areas may be arranged at the left edge, and in a case of changing to a horizontal orientation, the touch operation detection areas may be arranged at the top side or bottom side.

In this way, by arranging the touch operation detection areas to match the shape and usage state of the portable electronic device 2, it is possible to easily call up the key operation screen, and furthermore it is possible to improve user-friendliness.

### [Third Exemplary Embodiment]

Next, a description is given concerning a third exemplary embodiment. Since a hardware configuration of the portable electronic device 3 according to the present exemplary embodiment does not differ from the hardware configuration of the portable electronic device 1 according to the first exemplary embodiment, descriptions corresponding to FIG. 2 to FIG. 4 are omitted. In the present exemplary embodiment, a more detailed description is given concerning a key selection screen.

In the first exemplary embodiment, a description was given where hard keys 30 to 32 are assigned to keys displayed in the key selection screen. In the present exemplary embodiment, the description is such that the keys displayed in the key selection screen are not limited to hard keys.

As described above, in the description of the first exemplary embodiment the hard keys are displayed in the key selection screen, but it is possible to have soft keys rather than hard keys in the key selection screen. It is also possible to display virtual keys with different operations assigned to respective applications. Specifically, when a Web browser is running, it is possible to display keys used with high frequency such as "back", "forward", and "update page", in the key selection screen. In addition, when browsing email in an email application, keys such as "reply", "forward", and "delete" are displayed in a key selection screen, and these actions may be performed.

There is no need to display the key selection screen with the same content regardless of detection position in the touch operation detection area, and it is possible to change the content of the key selection screen in accordance with the detection position. Specifically, the touch operation detection area is divided into 2 areas, one above the other; in a case of detecting a user operation on a touch panel 20 of the upper half touch operation detection area, hard keys may be displayed in the key selection screen, and in a case of detecting an operation on the touch panel 20 of the lower half touch operation detection area, virtual keys displayed in the key selection screen may be changed in accordance with a running application.

In addition, as shown in FIG. 14, in a case of arranging a plurality of touch operation detection areas, it is possible to provide a selection screen (selection menu) so as to determine key selection screens to be displayed for respective areas. It is possible to determine the selection of virtual keys to be displayed in the key selection screen based on the number of times the touch operation detection area is touched, or to make a determination according to left hand mode or right hand mode, or to have keys arranged on side face(s) or the back face, rather than hard keys arranged on the same face as the touch panel 20 as with the hard keys 30 to 32.

There is no necessity to arrange the virtual keys displayed in the key selection screen in a horizontal orientation, and it is possible to arrange the virtual keys in any orientation such as a vertical orientation or the like; it is also possible to store this in a storage unit 42 that performs these settings by a selection menu.

Finally, preferred modes are summarized.
(Mode 1) As in the portable electronic device according to a first aspect described above.
(Mode 2) The portable electronic device wherein the control unit displays a display instruction area on the display unit to receive the second operation.
(Mode 3) The portable electronic device wherein the control unit receives a third operation from the operation unit when the portable electronic device is started up, or when the portable electronic device recovers from a lock state in which operation by the operation unit is restricted, and determines whether or not to display the virtual operation means, based on the third operation.
(Mode 4) The portable electronic device wherein the control unit, in a case where the virtual operation means is displayed, changes display position of the display instruction area based on the third operation.
(Mode 5) The portable electronic device wherein the operation unit receives an operation by a user via a touch panel, and the control unit detects a first touch point by the user in the display instruction area and displays the virtual operation means in a case where the first touch point moves to a second touch point.
(Mode 6) The portable electronic device wherein the control unit, after the virtual operation means is displayed, further executes the second function, in accordance with a position at which touch has been released.
(Mode 7) The portable electronic device wherein the display instruction area is plurally displayed in the display unit.
(Mode 8) The portable electronic device wherein the second function is a function assigned corresponding to a hard key in advance, or a function designated by a user.
(Mode 9) As in a control method of the portable electronic device according to a second aspect described above.
(Mode 10) The control method of the portable electronic device, further including a step of displaying a display instruction area on the display unit to receive the second operation.
(Mode 11) The control method of the portable electronic device, further including a step of receiving a third operation when the portable electronic device is started up, or when the portable electronic device recovers from a lock state in which operation by the operation unit is restricted, and a step of determining whether or not to display the virtual operation means, based on the third operation.
(Mode 12) The control method of the portable electronic device, further including a step in which the operation unit receives an operation by a user via a touch panel, and detects a first touch point by the user in the display instruction area, and a step of displaying the virtual operation means in a case where the first touch point moves to a second touch point.
(Mode 13) The control method of the portable electronic device, further including a step of executing, after the virtual operation means is displayed, the second function in accordance with a position at which touch has been released.
(Mode 14) As in a program according to a third aspect described above.
(Mode 15) The program, further executing a process of displaying a display instruction area on the display unit to receive the second operation.
(Mode 16) The program, further executing a process of receiving a third operation when the portable electronic device is started up, or when the portable electronic device recovers from a lock state in which operation by the operation unit is restricted, and a process of determining whether or not to display the virtual operation means, based on the third operation.
(Mode 17) The program, executing a process in which the operation unit receives an operation by a user via a touch panel, and detects a first touch point by a user in the display instruction area, and a process of displaying the virtual operation means in a case where the first touch point moves to a second touch point.
(Mode 18) The program, further executing a process of executing, after the virtual operation means is displayed, the second function, in accordance with a position at which touch has been released.

It is to be noted that the various disclosures of the abovementioned Patent Literature are incorporated herein by reference thereto. Modifications and adjustments of exemplary embodiments are possible within the bounds of the entire disclosure (including the scope of the claims) of the present invention, and also based on fundamental technological concepts thereof. Furthermore, various combinations and selections of various disclosed elements (including respective elements of the respective claims, respective elements of the respective exemplary embodiments, respective elements of the respective drawings, and the like) are possible within the scope of the claims of the present invention. That is, the present invention clearly includes every type of transformation and modification that a person skilled in the art can realize according to the entire disclosure including the scope of the claims and to technological concepts thereof. For example, when an operation is performed on the touch panel, it is possible to use a pen or the like, rather than a finger. In particular, with regard to numerical ranges described in the present specification, arbitrary numerical values or small ranges included in the relevant ranges should be interpreted to be specifically described even where there is no particular description thereof.

### [Reference Signs List]

1 to 3, 600 portable electronic device
10 LCD
20 touch panel
30 to 32 hard key
40, 603 control unit
41 CPU
42 storage unit
43 working memory
44 bus
100 touch panel control unit
200 input operation detection unit
300 LCD control unit
400 screen display control unit
421 non-volatile memory
422 ROM
501 upper pict area
502 lock state display area
503 pointer area
503a, 503b, 508a to 508e point
504 to 506 arrow
507, 507a to 507d touch panel operation detection area
509 to 511, 509a, 510a, 511a virtual key
601 display unit
602 operation unit

## Claims

1. A portable electronic device **characterized by** comprising:
a display unit that executes a screen display;
an operation unit that receives an operation by a user; and
a control unit that executes a first function when said operation unit receives a first operation, and displays a virtual operation means for executing a second function, on said display unit, when said operation unit receives a second operation.

2. The portable electronic device according to claim 1, wherein said control unit displays a display instruction area on said display unit to receive said second operation.

3. The portable electronic device according to claim 1 or 2, wherein said control unit receives a third operation from said operation unit when said portable electronic device is started up, or when said portable electronic device recovers from a lock state in which operation by said operation unit is restricted, and determines whether or not to display said virtual operation means, based on said third operation.

4. The portable electronic device according to claim 3, wherein said control unit, in a case where said virtual operation means is displayed, changes display position of said display instruction area based on said third operation.

5. The portable electronic device according to any one of claims 2 to 4, wherein
said operation unit receives an operation by a user via a touch panel, and
said control unit detects a first touch point by the user in said display instruction area, and displays said virtual operation means in a case where said first touch point moves to a second touch point.

6. The portable electronic device according to claim 5, wherein said control unit, after said virtual operation means is displayed, further executes said second function, in accordance with a position at which touch has been released.

7. The portable electronic device according to any one of claims 2 to 6, wherein said display instruction area is plurally displayed in said display unit.

8. The portable electronic device according to any one of claims 1 to 7, wherein said second function is a function assigned corresponding to a hard key in advance, or a function designated by a user.

9. A control method for a portable electronic device comprising a display unit that executes a screen display and an operation unit that receives an operation by a user, wherein said method is **characterized by** comprising:
a step of executing a first function when said operation unit receives a first operation; and
a step of displaying a virtual operation means for executing a second function, on said display unit, when said operation unit receives a second operation.

10. A program that executes on a computer controlling a portable electronic device that comprises a display unit that executes a screen display and an operation unit that receives an operation by a user, wherein said program executes:
a process of executing a first function when said operation unit receives a first operation; and
a process of displaying a virtual operation means for executing a second function, on said display unit, when said operation unit receives a second operation.
